# EUROPEAN PATENT SPECIFICATION

(11) **EP 0 607 759 B1**
(45) Date of publication and mention of the grant of the patent: **13.12.1995**
(21) Application number: 93830037.3
(22) Date of filing: 03.02.1993
(51) Int. Cl.: A47J 31/46, A47J 43/12, A47J 31/54

(54) **Device for producing frothing steam, in particular for use in hot-beverage preparing apparatus**
Aufschaumvorrichtung für Dampf, insbesondere bei der Bereitung von Heissgetränken
Dispositif pour faire mousser de la vapeur, en particulier pour préparer des boissons chaudes

(30) Priority: 19.01.1993 IT MI930063
(43) Date of publication of application: 27.07.1994
(73) Proprietor: C.G.F. S.r.l., 25014 Castenedolo (Brescia) (IT)
(72) Inventor: Rivetti, Firmo, Borgosatollo (Brescia) (IT)
(74) Representative: Righetti, Giuseppe

(56) References cited:
- DE-A- 3 838 235
- DE-A- 3 942 169
- DE-A- 3 942 713
- DE-A- 4 035 270
- FR-A- 2 506 592
- FR-A- 2 549 708

## Description

The present invention relates to a device for instantaneously producing frothing steam in a beverage, for use in particular in apparatus for preparing hot beverages, of the type comprising: a support casing; at least one pump to be operated for drawing water from a supply tank; heating means operatively disposed downstream of said pump for heating and vaporizing the water sent from the pump; a delivery nozzle communicating with the heating means and designed to deliver steam produced by the heating means to the outside of said device, said delivery nozzle projecting externally of the support casing so that it can be dipped in a beverage; a feed duct bringing the heating means into fluid communication with the delivery nozzle; mixing means combined with said delivery nozzle for mixing air with said steam. Such a device is known from document DE-A-3942713.

In greater detail, the device in question can be associated with usual coffee making apparatus, in order to enable the preparation and/or heating of other types of beverages and, in particular, the production of steamed milk for preparing "cappuccino".

It is known that domestic and/or commercial apparatus for instantaneously making coffee are usually provided with a device adapted to enable the delivery of steam to be used for preparing and/or heating other types or beverages. In particular, in most cases steam is used for converting milk into froth which is subsequently added to coffee in order to prepare the so-called "cappuccino".

Such a device generally comprises a feed duct extending from the top of a boiler provided with appropriate heating means, also adapted to heat the water to be used for making coffee. The feed duct is connected to a delivery nozzle accessible from the outside of the apparatus taken as a whole. On opening of a shutoff valve interposed along the feed duct and manually operable from the outside of the apparatus, the steam stored on top of the boiler flows to the duct itself to be delivered through said nozzle.

It it however to be noted that steam discharged into the beverage being prepared only enables heating of the beverage itself. When on the contrary, as it normally happens when milk is prepared for cappuccino, a frothy dispersion of air in the processed liquid is to be achieved, some skill by the user is usually required, so that steam coming out of the nozzle may entrain a certain amount of air into the liquid.

Recently, many expedients have been proposed which aimed at causing the dispersion of air in the milk together with a delivery of steam without the user being obliged to pay particular attention to the operation.

For example, European Patent No. 0 374 637 B1 discloses a mixing member provided with an elastic body to be sealingly engaged to the end of the delivery nozzle so that said nozzle terminates at a downwardly-open mixing chamber defined in the elastic body. Also opening into the mixing chamber is an air admitting duct extending vertically alongside the nozzle.

While steam is being delivered, the main body is plunged in the milk and the outflowing of steam from the nozzle into the mixing chamber causes a certain amount of air to be sucked into the mixing chamber itself. Air is mixed with steam and they are both discharged into the milk thereby causing the formation of froth.

German Patent No. 36 32 375 A1, Italian Utility Model No. 212 818, German Utility Model No. G 88 06 220.1 and German Patent No. 39. 42 169 A1 disclose devices in which the arrangement of an air-supplying duct is provided which is open to the surrounding atmosphere and connected to the delivery nozzle close to its outlet end so that a certain amount of air is entrained into the milk by effect of the steam jet coming out of the delivery nozzle.

In the embodiments disclosed in Patents DE 36 44 519 A1, DE 37 42 203 A1, DE 38 29 326 A1 and DE 39 42 713 A1 the air supplying duct is provided to open into a mixing chamber defined below the outlet end of the delivery nozzle, within a mixing body associated with the nozzle itself. In this manner, the dispersion of air in the steam takes place within the mixing chamber, immediately before the steam-air mixture is introduced into the liquid.

In other known solutions described for example in the Italian Patent No. 1 207 050 and the Italian Utility Model No. 209 298, the steam delivery pipe is connected to a mixing pipe into which other pipes open, for air and milk feeding respectively. Air and milk are sucked into the mixing pipe by effect of the steam jet, and mixed therein before being sprayed in a funnel-shaped element located above a vessel into which milk will be collected, heated and steamed.

DE-A-40 35 270 discloses a device of the same kind of the ones above mentioned, having only an air inlet in the mixing pipe, the milk to be frothed being previously introduced in the funnel-shaped element. A plug is provided for maintaining the milk in the funnel shaped element during the frothing operation.

It is pointed out that in all the above described embodiments, flow rate, feed pressure and outflow speed of the steam from the delivery nozzle must have important values in order to ensure an excellent mixing between air, steam, and subsesquently milk. In short, for achieving a good steamed milk, a considerable quantity of steam under important pressure is required.

As a result, a non negligible waiting time is required, while electric resistors of high power need to be used for achieving the steam production and storage to a sufficient amount in the upper part of the boiler associated with the apparatus, before starting to prepare milk.

It is also to be pointed out that the strong steam jet ejected from the delivery nozzle can cause serious burns as a result of lack of attention or prudence by the user.

In addition for enabling the above devices to be always efficient, they must be submitted to careful cleansing operations during which dismantling of the different mechanical parts is required, in that milk when heated always forms incrustations tending to clog the air passages that, on the other hand, must necessarily have a very reduced section.

In the light of the above, the main object of the present invention is substantially to eliminate the drawbacks of the known art, by providing a device capable of carrying out an excellent mixing between air and steam, and hence enabling steamed milk and/or other hot beverages to be prepared by using steam of very low flow rate and pressure values, which values can be easily achieved without any storage of steam in boilers or the like being required, steam being merely continuously produced by means of electric resistors of relatively low power.

The foregoing and further objects that will become more apparent in the course of the present description are substantially attained by a device for instantaneously producing frothing steam in a beverage, in particular for use in hot-beverage preparing apparatus, characterized in that said mixing means acts along the feed duct, on a length thereof included between the heating means and delivery nozzle, and essentially comprises a mixing member consisting of: an inlet chamber into which steam coming from the heating means flows; an outlet chamber communicating with said delivery nozzle; an intercommunication passage extending between the inlet chamber and outlet chamber and having a reduced diameter with respect to said chambers; a frusto-conical inlet portion and a frusto-conical outlet portion diverging from the opposite ends of the intercommunication passage towards the inlet chamber and outlet chamber respectively; at least one air-admitting port communicating with the surrounding atmosphere and opening into the intercommunication passage according to a direction transverse to the axis of said passage, said mixing member being located at all events at the outside of the beverage.

Further features and advantages will best be understood from the detailed description of a preferred embodiment of a device for instantaneously producing frothing steam, in particular for use in hot-beverage preparing apparatus, in accordance with the present invention. This description will be given hereinafter, by way of non-limiting example, with reference to the accompanying drawings, in which:

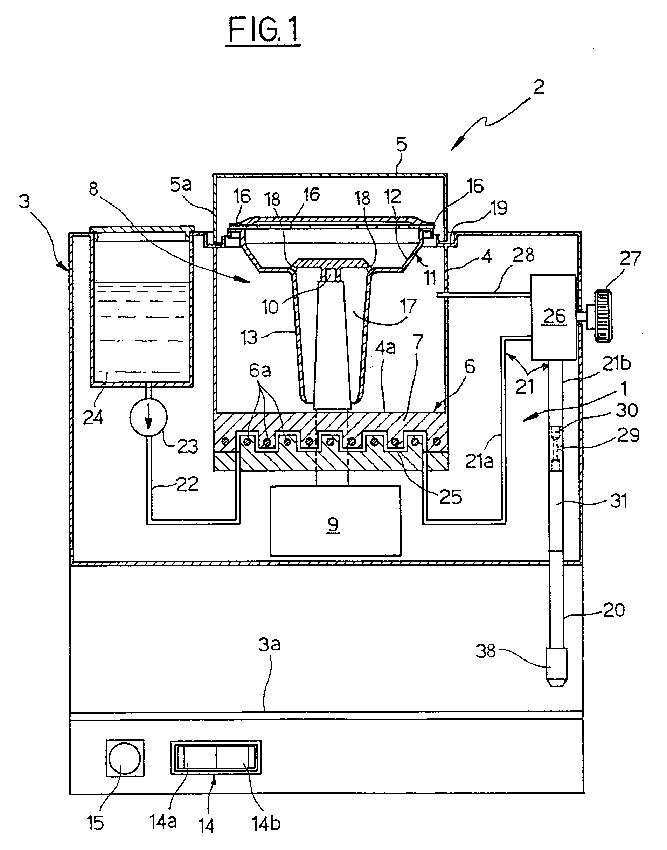

- Fig. 1 is a part sectional diagrammatic view of an hot-beverage making apparatus provided with a device for producing frothing steam in accordance with the invention;
- Fig. 2 is an enlarged sectional view of an air-steam mixing member associated with the device in question;
- Fig. 3 is an enlarged sectional view of a discharge end pipe associated with a delivery nozzle being part of the device in question.

Referring to the drawings, a device for instantaneously producing frothing steam, in particular for use in apparatus for preparing hot beverages in accordance with the present invention has been generally identified by reference numeral 1.

In accordance with the described embodiment, the device 1 is associated with an apparatus for producing hot beverages, in particular a coffee making apparatus known per se and conventional which has been denoted by 2.

Apparatus 2 essentially comprises a support casing 3 that at the upper part thereof carries a glass-like container 4 susceptible of being closed by a lid 5. A heating means 6 is located to the bottom of the glass-like container 4 and it is adapted to bring a metered amount of water previously introduced into the container, to a predetermined temperature. To this end, the heating means 6 essentially comprises at least an electric resistor 6a, in the form of a spiral for example, incorporated in a heating body 7 defining a bottom wall 4a in the container 4.

Associated with the container 4 is a centrifugation unit 8 comprising an electric motor 9 driving in rotation a spindle 10 coaxially and sealingly passing through the heating body 7.

Removably mounted to the spindle 10 is a centrifugation and percolation member 11 exhibiting a basket-shaped portion 12 at the upper part thereof, which is designed to contain a predetermined metered amount of powdered ground coffee. A suction collar 13 projects from the lower part of said basket-shaped portion 12, which collar is coaxially fitted on the spindle 10 and dips into the water in the container.

The electric resistor 6a and motor 9 can be selectively operated by a double switch 14, of the bat-handle type, located at the base of the support casing 3. In greater detail, after a predetermined amount of water has been introduced into the glass-like container 4, the user acts on one portion 14a of the switch 14 in order to activate the electric resistor 6a. When water has reached a predetermined temperature, a thermostat not shown as known, carries out the deactivation of the electric resistor 6a and switching on of an enabling lamp 15 located close to the switch 14. At this time the user call operate the electric motor 9 acting on a second portion of the switch 14.

When the electric motor 9 is working, the centrifugation and percolation member 11 rotates to a high speed and, as a result, the air initially contained therein is ejected through radial holes 16 located on the periphery of the basket-shaped portion 12. Consequently, the hot water contained in the container 4 is drawn into a hollow space 17 defined between the collar 13 and spindle 10 and subsequently reaches the basket-shaped portion 12 through suitable intercommunication holes 18 formed in the centrifugation and percolation member 11.

Still by effect of the centrifugal force, the powdered coffee previously introduced into the basket-shaped portion 12 is perimetrically compacted within said basket-shaped portion itself. The water from the intercommunication holes 18 passes through the powdered coffee and is subsequently ejected through the radial holes 16, stopping against a circonferential wall 5a of the lid 5 and subsequently reaching, by drop, an annular collecting channel 19. In known manner, the coffee beverage thus collected in the channel 19 is conveyed to one or more coffee cups not shown, located on a support base 3a defined by the support casing 3.

In a manner known per se, the device 1 is arranged to carry out, in case of need, production and ejection of steam through a delivery nozzle 20 projecting externally of the support casing 3 in the apparatus 2, so that it can be dipped into any beverage that one wishes to heat by means of the ejected steam. To this end, the delivery nozzle 20 is connected to a steam feeding duct 21, coming from the heating means 6, in turn connected to a delivery pipe 22 coming from a pump 23 electrically operable for drawing water from a supply tank 24. More particularly, in an original manner the heating means 6 consists of a heating body 7 into which a vaporisation coil 25 is formed that extends between the turns defined by the electric resistor 6a and communicating, at the respective opposite ends thereof, with the delivery pipe 22 of the pump 23 and the feed duct 21.

Preferably operation of the pump 23 is controlled simultaneously with the opening of a shutoff valve 26 operatively disposed between a first and a second length, 21a, 21b, of the feed duct 21 and operable by a knob 27 or similar means accessible from the outside of the support casing 3 for selectively opening and closing the steam passage to the delivery nozzle 20.

Also connected to the shutoff valve 26, preferably of the three-way type, is a discharge pipe 28 adapted to be brought into fluid communication with the first length 21a of the feed duct 21, for connecting the latter to the surrounding environment, when the steam passage to the second length 21b of the duct is cut off. Preferably, the discharge pipe 28 opens into the inside of the glass-like container 4.

The device 1 is also provided with mixing means 29 combined with the delivery nozzle 20 for mixing a given amount of air with the steam supplied through the feed duct 21.

Mixing of air and steam aims at enabling an efficient dispersion of minute air bubbles into the processed liquid, so as to produce milk froth for example, for preparing the so-called "cappuccino".

In accordance with the present invention, this mixing means 29 operates along the feed duct on a length included between the heating means and delivery nozzle.

In more detail, a mixing member 30 is provided to be operatively housed preferably inside the support casing 3 and located between the second length 21b of the feed duct and an end portion 31 of the duct itself, connected to the delivery nozzle 20.

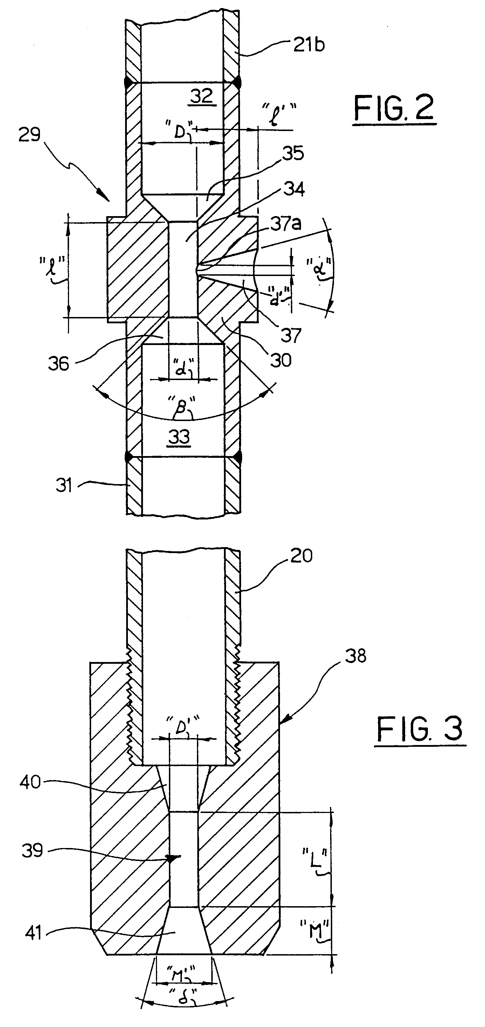

As clearly shown in Fig. 2, the mixing member 30 is advantageously provided with an inlet chamber 32 of cylindrical configuration, into which the second length 21b of the feed duct 21 opens, as well as, on the opposite side, with an outlet chamber 33 of cylindrical configuration too, communicating with the delivery nozzle 20 through the end portion 31 of the feed duct.

The inlet chamber 32 is connected to the outlet chamber 33 by an intercommunication passage 34, coaxial with the two chambers and of cylindrical configuration as well.

Extending from the opposite ends of the restricted passage 34 is a frusto-conical inlet portion 35 as well as a frusto-conical outlet portion 36 diverging towards the inlet chamber 32 and outlet chamber 33 respectively and joining them.

The mixing member 30 also exhibits at least one air admitting port 37 communicating, with the surrounding atmosphere and opening into the restricted passage 34 according to a direction transverse to the passage axis.

Still in accordance with the present invention, the ratio between the diameter "d" of the intercommunication passage 34 and the diameter "D" of the inlet chamber 32 is in the range of 0.3 to 0.5, and is preferably 0.4. In greater detail, the intercommunication passage 34 has a diameter of 1 to 2 mm, preferably 1.5 mm, and a length "l" included between 4 mm and 10 mm and preferably equal to 7 mm.

The summit angle β of each of the frusto-conical inlet 35 and outlet 36 portions is in the range of 70° to 80°, and preferably equal to 76°.

The air admitting port 37 advantageously is in the form of a truncated cone converging perpendicularly and at a centered position with respect to the longitudinal extension of the intercommunication passage 34. In more detail, the air admitting port 37 has a tapering shape the summit angle "α" of which is included between 35° and 45°, preferably corresponding to 40°, and opens into the intercommunication passage 34 by an air admitting orifice 37a of a diameter "d'" included between 0.3 mm and 0.5 mm, preferably equal to 0.4 mm.

A stopping member, such as a needle shutter, may be associated with the admitting port 37. said shutter being axially movable in the port for adjusting the amount of air introduced into the mixing member.

In addition, also associated with the delivery nozzle 20 is a discharge end pipe 38 that, as clearly shown in Fig. 3, has an outflow port 39 of a reduced diameter with respect to the inner diameter of the delivery nozzle. More particularly, the outflow port 39 preferably has a diameter "D'" of 2 to 2.5 mm., preferably 2.25 mm, and a length "L" in the range of 6 to 8 mm, preferably equal to 7 mm. At all events the ratio between the inner diameter "D'" and the length "L" of the outflow port must be included between 0.2 and 0.4 mm, and preferably corresponds to 0.32 mm.

Departing from the opposite ends of the outflow port 39 towards the delivery nozzle 20 and the surrounding atmosphere respectively are two frusto-conical end portions 40, 41 the summit angle "δ" of which is included between 35° and 45° and preferably corresponds to 38°. The ratio between the length "M" of each frusto-conical end portion 40, 41 and the major diameter "M'" of the same is equal to 0.6.

Operation of the steam producing device 1 described above mainly as regards structure, is as follows.

After causing the introduction of the steam delivery nozzle 20 into the beverange being prepared, milk for example, the user acts on the drive knob 27 of the shutoff valve 26 in order to bring the first and second lengths 21a, 21b of the feed duct 21 into fluid communication. Stimultaneoulsy with the opening of the shutoff valve 26, operation of the pump 23 and electric resistor 6a associated with the heating means 6 occurs.

Water drawn from the supply tank 24 upon the action of the pump 23 is continuously sent to the vaporization coil 25 at a pressure of about 0.18 bar and therein immediately converted to steam, by effect of heat transmitted through the heating body 7.

Steam continuously going out of the vaporization coil 25 at a pressure of about 0.18 bar passes through the shutoff valve 26 and comes out at a pressure of about 0.12 bar.

Subsequently said steam reaches the inlet chamber 32 of the mixing member 30 and, following its flowing through the intercommunication passage 34, undergoes an increase in speed and a corresponding pressure reduction as far as a lower value than the atmospheric pressure is reached. As a result, air is called back through the air admitting port 37 and therefore its mixing with steam occurs.

The air-steam mixture thus produced, still having a higher temperature than 100°C, then reaches the delivery nozzle 20 at a pressure of about 0.04 bar and is sprayed into milk at a temperature of about 100°C, thereby heating said milk while froth is at the same time produced by effect of the dispersion of air in the form of minute bubbles.

Once milk preparation has been completed, the shutoff valve 26 is brought back to the closed condition, which simultaneously brings about the deactivation of the pump 26 and electric resistor 6a.

Closure of the shutoff valve 26 also causes the immediate venting through the discharge pipe of the pressure present in the first length 21a of the feed duct 21, the heating coil 25 and delivery duct 22 of the pump 23.

The present invention attains the intended purposes.

In fact it is pointed out that due to the structural configuration of the mixing member, and its placement upstream of the delivery nozzle, an excellent mixing between air and steam is reached, even if the flow rate and pressure values are greatly lower than those required by the devices of the known art for achieving a good operation. In fact, mixing of air and steam carried out completely externally of the liquid into which said mixture will subsequently be injected, can take place in a simpler and more efficient manner than in the known art. By way of example the device described enables vaporization of 13 cm³ of water per minute of continuous operation.

In addition the low steam flow rate sufficient to cause operation of the device can be reached instantaneously, without waiting time being required for producing an appropriate high-pressure steam reserve, and without the presence of high-power electric resistors, as it happens on the contrary with traditional apparatus above all for domestic use.

In addition, being the mixing member located within the support casing and at all events at the outside of the processed liquid, frequent and careful cleansing operations are no longer required, said operations being on the contrary necessary in the devices of the known art due to clogging of the air passages by milk or other beverage deposits.

Furthermore, since steam is supplied at a low flow rate, heating of the milk can be achieved by effect of the steam condensation in the beverage, without adding high amounts of water thereto.

It will be also recognized that steam delivery at low flow rate values involves important advantages in terms of safety. In fact any risk of accidents, by effect of the steam jet from the delivery nozzle is greatly reduced, in case of imprudent use of the apparatus or inattention. In the connection, it is pointed out that a microswitch or similar means incorporated in the shutoff valve may also be associated with the delivery nozzle, for immediately stopping steam feeding and deactivating the pump and electric resistor, if the nozzle itself, conventionally engaged in an oscillatable manner to the casing, should accidentally take a raised position with respect to the normal use condition while steam is being delivered. In this case too, as soon as the steam supply is stopped, venting of steam under pressure through the discharge duct 28 will take place.

The invention includes all changes and modifications which do not constitute a departure from the scope of this invention as claimed in the following claims.

## Claims

1. A device for instantaneously producing frothing steam in a beverage, for use in particular in apparatus for preparing hot beverages, comprising:
- a support casing (3);
- at least one pump (23) to be operated for drawing water from a supply tank (24);
- heating means (6) operatively disposed downstream of said pump (3) for heating and vaporizing the water sent from the pump;
- a delivery nozzle (20) communicating with the heating means (6) and designed to deliver steam produced by the heating means to the outside of said device, said delivery nozzle (20) projecting externally of the support casing (3), so that it can be dipped in a beverage
- a feed duct (21, 31) bringing the heating means (6) into fluid communication with the delivery nozzle (20);
- mixing means (29) combined with said delivery nozzle (20) for mixing air with said steam, characterized in that said mixing means (29) acts along the feed duct (21, 31), on a length thereof included between the heating means (6) and delivery nozzle (20), and essentially comprises a mixing member (30) consisting of:
- an inlet chamber (32) into which steam coming from the heating means flows (6);
- an outlet chamber (33) communicating with said delivery nozzle (20);
- an intercommunication passage (34) extending between the inlet chamber (32) and outlet chamber (33) and having a reduced diameter ("d") with respect to said chambers;
- a frusto-conical inlet portion (35) and a frusto-conical outlet portion (36) diverging from the opposite ends of the intercommunication passage (34) towards the inlet chamber (32) and outlet chamber (33), respectively;
- at least one air admitting port (37) communicating with the surrounding atmosphere and opening into the intercommunication passage (34) according to a direction transverse to the axis of said passage, said mixing member being located at all events at the outside of the beverage.

2. A device according to claim 1, characterized in that said heating means (6) comprises at least one electric resistor (6a) incorporated in a heating body (7) within which a vaporization coil (25) is formed which is connected, on opposite sides thereof, to a delivery pipe (22) coming from said pump (23) and to said feed duct (21), so that water continuously sent from the pump (13) is directly converted to steam following passage through said vaporization coil (25).

3. A device according to claim 1, characterized in that the ratio between the diameter ("d") of the intercommunication passage (34) and the diameter ("D") of said inlet chamber (32) is in the range of 0.3 to 0.5.

4. A device according to claim 3, characterized in that said intercommunication passage (34) has a diameter ("d") in the range of 1.2 mm to 2 mm and a length ("l") included between 4 and 10 mm.

5. A device according to claim 3, characterized in that said air admitting port (37) is of frusto-conical configuration converging perpendicularly and at a centered position with respect to the longitudinal extension of the intercommunication passage (34), said port (37) opening into the intercommunication passage (34) through an admission orifice (37a) of a diameter ("d'") included between 0.3 mm and 0.5 mm and having a tapering shape with a summit angle ("α") in the range of 35 to 45°.

6. A device according to claim 5, characterized in that the air admitting port (37) has a longitudinal extension ("l'") of 3 to 4 mm.

7. A device according to claim 1, characterized in that each of said frusto-conical inlet and outlet portions (35, 36) has a summit angle ("β") in the range of 70 to 80°.

8. A device according to claim 1, characterized in that the delivery nozzle (20) terminates with a discharge end pipe (38) having an outflow port (39) of a reduced diameter ("D'") with respect to the inner diameter of the delivery nozzle and exhibiting frusto-conical end portions (40, 41) diverging towards the delivery nozzle (20) and the surrounding atmosphere, respectively.

9. A device according to claim 8, characterized in that the outflow port (39) is of a diameter ("D'") in the range of 2 to 2.5 mm and a length ("L") included between 6 mm and 8 mm.

10. A device according to claim 8, characterized in that the ratio between the diameter ("D'") and length ("L") of the outflow port (39) is included between 0.2 and 0.4.

11. A device according to claim 8, characterized in that said frusto-conical portions (40, 41) have a summit angle ("δ") included between 35° and 45°.

12. A device according to claim 8, characterized in that the ratio between the length ("M") of each frusto-conical end portion (40, 41) and the major diameter ("M'") of same is 0.6.

13. A device according to claim 2, characterized in that it further comprises at least one shutoff valve (26) for selectively opening and closing the steam passage from a first length (21a) to a second length (21b) of the feed duct (21), communicating with the heating means (6) and delivery nozzle (20) respectively.

14. A device according to claim 13, characterized in that said shutoff valve (26) is electrically connected to said pump (23) and electric resistor (6a) in order to cause actuation of same when the first and second lengths (21a, 21b) of the feed duct (21) communicate with each other.

15. A device according to claim 14, characterized in that the shutoff valve (26) is a three-way valve arranged to connect the first length (21a) of the feed duct (21) to a discharge pipe (28) communicating with the surrounding atmosphere when fluid communication with the second length (21) of the feed duct is cut off.

16. A device according to claim 2, characterized in that the heating body (7) defines a bottom wall (4a) of a water containing chamber being part of a coffee-making unit.

## Patentansprüche

1. Aufschaumvorrichtung für Dampf, insbesondere bei der Bereitung von Heißgetränken, zur Verwendung insbesondere in Geräten zur Bereitung von Heißgetränken, umfassend:
- einen Trag-und Aufnahmeaufbau (3);
- mindestens eine Pumpe (23), die zur Entnahme von Wasser aus einem Speicher (14) betätigbar ist;
- Heizmittel (6), die wirksam nach der Pumpe (23) angeordnet sind, um das von der Pumpe geförderte Wasser zu erhitzen und zu verdampfen;
- eine Abgabedüse (20), die mit den Heizmitteln (6) in Verbindung steht und dazu ausgelegt ist, den durch die Heizmittel selbst erzeugten Dampf außerhalb der Vorrichtung abzugeben, wobei die Abgabedüse (20) außerhalb des Trag- und Aufnahmeaufbaus (3) derart vorsteht, daß sie in ein Getränk eingetaucht werden kann;
- einen Zuführkanal (21, 31), der strömungsmäßig die Heizmittel (6) und die Abgabedüse (20) in Verbindung setzt;
- Mischmittel (29), die an die Abgabedüse (20) gekoppelt sind, um Luft mit dem Dampf zu vermischen,
dadurch gekennzeichnet,
daß die Mischmittel (29) längs des Zuführkanals (21, 31) in einem Abschnitt zwischen den Heizmitteln (6) und der Abgabedüse (20) wirken und im wesentlichen ein Mischorgan (30) umfassen, mit:
- einer Eintrittskammer (32), in der der von Heizmitteln (6) kommende Dampf einfließt;
- einer Austrittskammer (33), die mit der Abgabedüse (20) in Verbindung steht;
- einem Verbindungsdurchtritt (34), der sich zwischen der Eintrittskammer (32) und der Austrittskammer (33) erstreckt und einen gegenüber den genannten Kammern verminderten Durchmesser ("d") aufweist;
- einem kegelstumpfförmigen Eintrittsteil (35) und einem kegelstumpfförmigen Austrittsteil (36), die von den entgegengesetzten Enden des Verbindungsdurchtrittes (34) jeweils in Richtung der Eintrittskammer (32) und der Austrittskammer (33) auseinander laufen;
- mindestens einer Lufteintrittsöffnung (37), die mit der Umgebung in Verbindung steht und in den Verbindungsdurchtritt (34) gemäß einer zur Achse des Durchtritts querliegenden Richtung eintritt, wobei das Mischorgan jedenfalls außerhalb des Getränkes des Durchtritts querliegenden Richtung eintritt, wobei das Mischorgan jedenfalls außerhalb des Getränkes angeordnet ist.

2. Vorrichtung nach Anspruch 1, dadurch gekennzeichnet, daß die Heizmittel (6) mindestens einen elektrischen widerstand (6a) umfassen, der in einem Heizkörper (7) eingebaut ist, in dem eine Verdampfungsschlange (25) ausgenommen ist, die von jeweils entgegengesetzten Seiten mit einer von der Pumpe (23) abgeleiteten Förderleitung (22) und mit dem Zuführkanal (21) verbunden ist, wodurch das kontinuierlich von der Pumpe (23) zugelieferte Wasser unmittelbar aufgrund des Durchtrittes durch die Verdampfungsschlange (25) in Dampf umgewandelt wird.

3. Vorrichtung nach Anspruch 1, dadurch gekennzeichnet, daß das Verhältnis zwischen dem Durchmesser ("d") des Verbindungsdurchtrittes (34) und dem Durchmesser ("D") der Eintrittskammer (32) zwischen 0,3 und 0,5 liegt.

4. Vorrichtung nach Anspruch 3, dadurch gekennzeichnet, daß der Verbindungsdurchtritt (34) einen Durchmesser ("d") zwischen 1,2mm und 2mm und eine Länge ("l") zwischen 4mm und 10mm aufweist.

5. Vorrichtung nach Anspruch 3, dadurch gekennzeichnet, daß die Lufteintrittsöffnung (37) eine kegelstumpfförmige Ausbildung aufweist, die senkrecht und in mittiger Stellung gegenüber der Längsabwicklung des Verbindungsdurchtrittes (34) zusammenläuft, wobei diese Öffnung (37) in den Verbindungsdurchtritt (34) über eine Eintrittsöffnung (37a) einmündet, die einen Durchmesser ("d'") zwischen 0,3mm und 0,5mm und eine Konizität mit einem Scheitelwinkel ("α") zwischen 35° und 45° aufweist.

6. Vorrichtung nach Anspruch 5, dadurch gekennzeichnet, daß die Lufteintrittsöffnung (37) eine Längsabwicklung ("l") zwischen 3mm und 4mm aufweist.

7. Vorrichtung nach Anspruch 1, dadurch gekennzeichnet, daß jeder der kegelstumpfförmigen Eintritts- und Austrittsteile (35, 36) einen Scheitelwinkel ("β") zwischen 70° und 80° aufweist.

8. Vorrichtung nach Anspruch 1, dadurch gekennzeichnet, daß die Abgabedüse (20) mit einem Austrittsende (38) endet, das eine Ausflußöffnung (29) gegenüber dem Innendurchmesser der Abgabedüse verminderten Durchmessers ("D'") und kegelstumpfförmige Endteile (40, 41) aufweist, die jeweils in Richtung der Abgabedüse (20) und der Umgebung auseinanderlaufen.

9. Vorrichtung nach Anspruch 8, dadurch gekennzeichnet, daß die Ausflußöffnung (39) einen Durchmesser ("T'") zwischen 2mm und 2,5mm und eine Länge ("L") zwischen 6mm und 8mm aufweist.

10. Vorrichtung nach Anspruch 8, dadurch gekennzeichnet, daß das Verhältnis zwischen dem Durchmesser ("D'") und der Länge ("L") der Ausflußöffnung (39) zwischen 0,2 und 0,4 liegt.

11. Vorrichtung nach Anspruch 8, dadurch gekennzeichnet, daß die kegelstumpfförmigen Teile (40, 41) einen Scheitelwinkel ("δ") zwischen 35° und 45° aufweisen.

12. Vorrichtung nach Anspruch 8, dadurch gekennzeichnet, daß das Verhältnis zwischen der Länge ("M") eines jeden kegelstumpfförmigen Endteils (40, 41) und den größten Durchmesser ("M'") derselben gleich 0,6 ist.

13. Vorrichtung nach Anspruch 2, dadurch gekennzeichnet, daß sie überdies mindestens ein Absperrventil (26) umfaßt, um wahlweise den Dampfdurchtritt von einem ersten Abschnitt (21a) in einen zweiten Abschnitt (21b) des Zuführkanals (21) zu öffnen bzw. zu schließen, die jeweils mit den Heizmitteln (6) und der Abgabedüse (20) in Verbindung stehen.

14. Vorrichtung nach Anspruch 13, dadurch gekennzeichnet, daß das Absperrventil (26) mit der Pumpe (23) und dem elektrischen Widerstand (6a) elektrisch verbunden ist, um dieselben in Betrieb zu setzen, sobald der erste und der zweite Abschnitt (21a, 21b) des Zuführkanals (21) miteinander komunizieren.

15. Vorrichtung nach Anspruch 14, dadurch gekennzeichnet, daß das Absperrventil (26) ein Dreiwegeventil ist, das dazu ausgelegt ist, um den ersten Abschnitt (21a) des Zuführkanals (21) mit einer Auslassleitung (28) zu verbinden, die mit der Umgebung in Verbindung steht, sobald die Strömungsverbindung mit dem zweiten Abschnitt (21) des Zuführkanals unterbrochen ist.

16. Vorrichtung nach Anspruch 2, dadurch gekennzeichnet, daß der Heizkörper (7) eine Bodenwand (4a) einer Wasseraufnahmekammer festlegt, die der Kaffeezubereitungseinheit angehört.

## Revendications

1. Dispositif pour faire instantanément mousse de la vapeur dans une boisson, à utiliser en particulier pour préparer des boissons chaudes, comprenant:
- une enveloppe de support (3);
- au moins une pompe (23) à actionner pour tirer de l'eau d'un réservoir d'alimentation (24);
- des moyens de chauffage (6) disposés pour fonctionner en aval de ladite pompe (23), en vue, de chauffer et vaporiser l'eau en provenance de la pompe;
- une buse de distribution (20) en communication avec les moyens de chauffage (6) et destinée à distribuer la vapeur produite par lesdits moyens de chaffage à l'extérieur dudit dispositif, ladite buse de distribution (20) faisant saillie à l'extérieur du corps de support (3), de telle sorte qu'elle peut être plongée dans une boisson;
- un conduit d'alimentation (21, 31) portant les moyens de chauffage (6) en communication de fluide avec la buse de distribution (20);
- des moyens mélangeurs (29) combinés avec ladite buse de distribution (20) pour effectuer le mélange d'air avec ladite vapeur, caractérisé en ce que lesdits moyens mélangeurs (29) agissent le long du conduit d'alimentation (21, 31), sur une portion de ce dernier comprise entre les moyens de chauffage (6) et la buse de distribution (20), et essentiellement comportent un organe mélangeur (30) se composant:
- d'une chambre d'entrée (32) dans laquelle s'écoule la vapeur en provenance des moyens de chauffage (6);
- d'une chambre de sortie (33) en communication avec ladite buse de distribution (20);
- d'un passage d'intercommunication (34) s'étendant entre la chambre d'entrée (32) et la chambre de sortie (33) et ayant un diamètre plus petit ("d") que celui desdites chambres;
- d'une portion d'entrée (35) de forme tronconique et d'une portion de sortie (36) de forme tronconique divergeant des extrémités opposées du passage d'intercommunication (34) respectivement vers la chambre d'entrée (32) et la chambre de sortie (33);
- d'au moins une lumière d'admission d'air (37) en communication avec l'atmosphère environnante et débouchant dans le passage d'intercommunication (34) suivant une direction trasversale à l'axe dudit passage, ledit organe mélangeur étant placé en tout cas à l'extérieur de la boisson.

2. Dispositif selon la revendication 1, caractérisé en ce que lesdits moyens de chauffage (6) comportent au moins une résistance électrique (6a) incorporée dans un corps chauffant (7) à l'intérieur duquel il y a un serpentin de vaporisation (25) qui est relié, à ses côtés opposés, à un tuyau de refoulement (22) en provenance de ladite pompe (23) et audit conduit d'alimentation (21), de sorte que l'eau envoyée continuellement de la pompe (13) est directement transformée en vapeur à la suite de son passage à travers ledit serpentin de vaporisation (25).

3. Dispositif selon la revendication 1, caractérisé en ce que le rapport entre le diamètre ("d") du passage d'intercommunication (34) et le diamètre ("D") de ladite chambre d'entrée (32) est compris entre 0,3 et 0,5.

4. Dispositif selon la revendication 3, caractérisé en ce que ledit passage d'intercommunication (34) a un diamètre ("d") compris entre 1,2 et 2 mm et une longueur ("l") allant de 4 à 10 mm.

5. Dispositif selon la revendication 3, caractérisé en ce que ladite lumière d'admission d'air (37) est de forme tronconique convergeant perpendiculairement et vers une position centrée par rapport à l'extension longitudinale du passage d'intercommunication (34), ladite lumière (37) débouchant dans le passage d'intercommunication (34) à travers un orifice d'admission (37a) de diamètre ("d'") compris entre 0,3 mm et 0,5 mm et ayant une forme effilée dont l'angle au sommet ("α") est compris entre 35° et 45°.

6. Dispositif selon la revendication 5, caractérisé en ce que la lumière d'admission d'air (37) a une extension longitudinale ("l'") allant de 3 à 4 mm.

7. Dispositif selon la revendication 1, caractérisé en ce que chacune desdites portions d'entrée et de sortie de forme tronconique (35, 36) a un angle au sommet ("β") compris entre 70° et 80°.

8. Dispositif selon la revendication 1, caractérisé en ce que la buse de distribuition (20) se termine par un tuyau final de décharge (38) ayant une lumière de sortie (39) de diamètre ("D'") plus petit que le diamètre intérieur de la buse de distribution et présentant des portions extrêmes (40, 41) de forme tronconique divergeant respectivement vers la buse de distribution (20) et l'atmosphère environnante.

9. Dispositif selon la revendication 8, caractérisé en ce que la lumière de sortie (39) a un diamètre ("D'") compris entre 2 et 2,5 mm et une longuer ("L") allant de 6 mm à 8 mm.

10. Dispositif selon la revendication 8, caractérisé en ce que le rapport entre le diamètre ("D'") et la longueur ("L") de la lumière de sortie (39) est compris entre 0,2 et 0,4.

11. Dispositif selon la revendication 8, caractérisé en ce que lesdites portions (40, 41) de forme tronconique ont un angle au sommet ("δ") compris entre 35° et 45°.

12. Dispositif selon la revendication 8, caractérisé en ce que le rapport entre la longueur ("M") de chaque portion extrême tronconique (40, 41) et son plus grand diamètre ("M'") est 0,6.

13. Dispositif selon la revendication 2, caractérisé en ce qu'il comporte en outre au moins une soupape d'isolement (26) pour ouvrir et fermer sélectivement le passage de la vapeur depuis un premier tronçon (21a) jusqu'à un deuxième tronçon (21b) du conduit d'alimentation (21), lesquels communiquent respectivement avec les moyens de chauffage (6) et la buse de distribution (20).

14. Dispositif selon la revendication 13, caractérisé en ce que ladite soupape d'isolement (26) est reliée électriquement auxdites pompe (23) et résistance électrique (6a) pour en causer l'actionnement quand les premier et deuxième tronçons (21a, 21b) du conduit d'alimentation (21) sont en communication entre eux.

15. Dispositif selon la revendication 14, caractérisé en ce que la soupape d'isolement (26) est une soupape à trois voies agencée de manière à relier le premier tronçon (21) du conduit d'alimentation (21) à un tuyau de décharge (28) communiquant avec l'atmposphère environnante quand la communication de fluide avec le deuxième tronçon (21) du conduit d'alimentation est interrompue.

16. Dispositif selon la revendication 2, caractérisé en ce que le corps chauffant (7) définit une paroi de fond (4a) d'une chambre destinée à contenir l'eau, faisant partie d'une unité pour la préparation du café.
